# EUROPEAN PATENT APPLICATION

(11) **EP 4 290 679 A1**
(43) Date of publication of application: **13.12.2023**
(21) Application number: 22911893.0
(22) Date of filing: 20.12.2022
(51) Int. Cl.: H01M 50/673, H01M 10/42, A62C 3/16, A62C 37/08

(54) **BATTERY PACK WITH IMPROVED SAFETY**

(30) Priority: 22.12.2021 KR 20210185390; 04.11.2022 KR 20220146362
(71) Applicant: LG Energy Solution, Ltd., Seoul 07335 (KR)
(72) Inventor: AHN, Jong-Kyu, Daejeon 34122 (KR); KIM, Ki-Youn, Daejeon 34122 (KR); KIM, Hyeon-Kyu, Daejeon 34122 (KR); MUN, Jeong-O, Daejeon 34122 (KR); PARK, Gi-Dong, Daejeon 34122 (KR); YUN, Young-Won, Daejeon 34122 (KR); LEE, Seong-Ju, Daejeon 34122 (KR); LEE, Jae-Ki, Daejeon 34122 (KR)
(74) Representative: Plasseraud IP
(86) International application number: PCT/KR2022/020891
(87) International publication number: WO 2023/121260

(57) **Abstract**

The present disclosure discloses a battery pack that is advantageous for effective control and maintenance of thermal events. A battery pack according to one aspect of the present disclosure may include a battery module having one or more battery cells; a fire extinguishing tank holding a fire extinguishing liquid, disposed on top of the battery module and having a through hole formed therein; and a cover member installed in the through hole of the fire extinguishing tank and configured to open or close the through hole according to a change in internal pressure of the fire extinguishing tank.

## Description

### TECHNICAL FIELD

The present application claims priority to Korean Patent Application No. 10-2021-0185390 filed on December 22, 2021 and Korean Patent Application No. 10-2022-0146362 filed on November 4, 2022, the disclosures of which are incorporated herein by reference.

The present disclosure relates to a battery, and more specifically, to a battery pack having improved safety and durability, and an energy storage system including the same.

### BACKGROUND ART

Currently commercialized secondary batteries include nickel cadmium batteries, nickel hydride batteries, nickel zinc batteries, lithium secondary batteries and the like, and among them, lithium secondary batteries are in the spotlight because they have almost no memory effect compared to nickel-based secondary batteries and thus have advantages of free charge/discharge, very low self-discharge rate and high energy density.

Such lithium secondary batteries mainly use a lithium-based oxide and a carbon material as a positive electrode active material and a negative electrode active material, respectively. Lithium secondary batteries include an electrode assembly in which a positive electrode plate and a negative electrode plate coated with the positive electrode active material and the negative electrode active material, respectively are disposed with a separator interposed therebetween, and an exterior material, that is, a battery case, for sealing and accommodating the electrode assembly together with an electrolyte.

In general, depending on the shape of an exterior material, lithium secondary batteries may be classified into a can-type secondary battery in which an electrode assembly is embedded in a metal can, and a pouch-type secondary battery in which an electrode assembly is embedded in a pouch of an aluminum laminate sheet.

Such secondary batteries have been widely used for power or energy storage not only in small devices such as portable electronic devices, but also in medium and large devices such as electric vehicles and energy storage systems (ESSs), and the extent of their use is rapidly increasing. Moreover, in recent years, residential energy storage systems have been widely used to store and supply electric power for use in buildings such as houses or buildings. In addition, the core component of such residential energy storage systems may be referred to as a battery pack.

Various battery packs, including those used in such residential ESSs or the like, include a plurality of battery cells (secondary batteries) to increase capacity and/or output. In particular, in order to increase the energy density of a battery pack, a plurality of battery cells are often arranged in a dense state in a very narrow space.

In configuring such a battery pack, one of the typically important issues is safety. In particular, when a thermal event occurs in any one of a plurality of battery cells included in the battery pack, propagation of the event to other battery cells needs to be suppressed. Moreover, a venting gas may be ejected from a battery cell in which thermal runaway occurs, and such venting gas may cause thermal runaway in other battery cells, resulting in thermal propagation.

If a thermal event of a specific battery cell is not properly suppressed, it may cause a series of events in several battery cells included in the battery pack, which may cause a bigger problem such as ignition or explosion of the entire battery pack. Moreover, ignition or explosion generated in the battery pack may cause significant damage to nearby lives or property. In particular, in the case of a residential battery pack, a fire or explosion may endanger the safety of people living in the house, and may spread to the house fire to cause more significant damage. Therefore, a thermal event generated in a battery cell included in a battery pack needs to be suppressed quickly and effectively.

Various methods have been proposed to control such thermal events inside the battery pack. A typical method among them is to bring a fire or heat under control using a fire extinguishing liquid. The fir extinguishing liquid may be stored in a sealed storage space (tank), but the state of the fire extinguishing liquid may change depending on various circumstances, such as the installation environment of the battery pack, the type of liquid, or the like. In particular, when the battery pack is installed outdoors, it is possible that the fire extinguishing liquid may freeze in a situation where the outdoor temperature is low, such as in polar regions or during winter. At this time, the pressure inside the tank changes, and there is a possibility that the tank may be damaged or damage such as cracks may occur.

In addition, the tank may be configured in a sealed state, and due to this sealing, there may be a problem that the fire extinguishing liquid may not be smoothly discharged to the outside of the tank. Also, when the fire extinguishing liquid is reduced inside the tank due to fire suppression or evaporation, maintenance such as replenishment of the fire extinguishing liquid needs to be performed well.

### DISCLOSURE

### Technical Problem

The present disclosure is designed to solve the problems of the related art, and therefore the present disclosure is directed to providing a battery pack and the like that are advantageous in maintenance management together with effective control of thermal events.

However, technical problems to be solved by the present disclosure are not limited to the above-described problems, and other problems not mentioned herein may be clearly understood by those skilled in the art from the following description of the present disclosure.

### Technical Solution

A battery pack according to one aspect of the present disclosure for achieving the above-described objectives may include a battery module having one or more battery cells; a fire extinguishing tank holding a fire extinguishing liquid, disposed on top of the battery module and having a through hole formed therein; and a cover member installed in the through hole of the fire extinguishing tank and configured to open or close the through hole according to a change in internal pressure of the fire extinguishing tank.

Here, the fire extinguishing tank may include a rupture member configured to be ruptured under a predetermined condition and to allow the outflow of the fire extinguishing liquid when ruptured.

Also, the battery pack according to the present disclosure may further include a control module connected to the battery module and configured to manage the battery module, wherein the fire extinguishing tank may be mounted between the battery module and the control module.

Also, the cover member may be configured such that an opening/closing operation is performed in a direction compensating for a pressure change inside the fire extinguishing tank.

Also, the cover member may have a first cover configured to be opened when the pressure inside the fire extinguishing tank increases.

Also, the first cover may be configured to be openable in an outward direction.

Also, the fire extinguishing tank may include an inner tank holding the fire extinguishing liquid in the inner space and an outer tank at least partially surrounding the outer side of the inner tank, wherein the first cover may be mounted on the outer tank.

Also, the first cover may be located on the side of the fire extinguishing tank.

Also, the cover member may have a second cover configured to be opened when the pressure inside the fire extinguishing tank decreases.

Also, the second cover may be configured to be openable in an inward direction.

Also, the fire extinguishing tank may include an inner tank holding the fire extinguishing liquid in the inner space and an outer tank at least partially surrounding the outer side of the inner tank, wherein the second cover may be mounted on the inner tank.

Also, the second cover may be located on the upper side of the fire extinguishing tank.

Also, the cover member may be configured to switch from an open state to a closed state when the pressure difference between the pressure inside the fire extinguishing tank and the external air pressure comes within a certain level.

Also, an energy storage system according to another aspect of the present disclosure for achieving the above-described objectives includes a battery pack according to the present disclosure.

### Advantageous Effects

According to one aspect of the present disclosure, a battery pack having improved safety may be provided.

In particular, according to an embodiment of the present disclosure, when a thermal event such as a thermal runaway situation occurs in a battery cell or the like, the propagation of the thermal runaway situation may be prevented through the injection of a fire extinguishing liquid, thereby reducing the likelihood of occurrence of a larger problem such as a fire or explosion.

In addition, even if a fire occurs on the battery cell side, it is possible to prevent the fire from spreading to surroundings such as residential spaces or the like by quickly extinguishing the fire.

Moreover, according to an embodiment of the present disclosure, when the fire extinguishing liquid is discharged from the inside of the fire extinguishing tank toward the battery cell side, the fire extinguishing liquid may be discharged smoothly.

In addition, according to one aspect of the present disclosure, the durability of the component in which the fire extinguishing liquid is stored may be improved. In particular, the fire extinguishing tank may be prevented from breaking or being damaged even in a situation where the fire extinguishing liquid is frozen.

In addition, according to one aspect of the present disclosure, maintenance of a battery pack, particularly a fire extinguishing tank, may be convenient and have an advantageous effect on cost reduction.

In addition, several other additional effects may be achieved by various embodiments of the present disclosure. The various effects of the present disclosure will be described in detail in each embodiment, or descriptions of effects that may be easily understood by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a perspective view showing the configuration of a battery pack according to an embodiment of the present disclosure.
FIG.2 is an exploded perspective view of the configuration of FIG. 1.
FIG. 3 is an enlarged view of portion A1 in FIG. 2.
FIG. 4 is a perspective view of a configuration of a fire extinguishing tank according to an embodiment of the present disclosure as viewed from the bottom.
FIG. 5 is a perspective view showing a separated fire extinguishing tank according to an embodiment of the present disclosure.
FIG. 6 is an enlarged cross-sectional view of a portion of a fire extinguishing tank according to an embodiment of the present disclosure.
FIG. 7 is a view schematically showing an example of a configuration for injecting a fire extinguishing liquid into a battery pack according to an embodiment of the present disclosure.
FIG. 8 is an enlarged cross-sectional view of another portion of a fire extinguishing tank according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Meanwhile, the terms indicating directions as used herein such as upper, lower, left, right, front, and rear are used for convenience of description only, and it is obvious to those skilled in the art that the term may change depending on the position of the stated element or an observer.

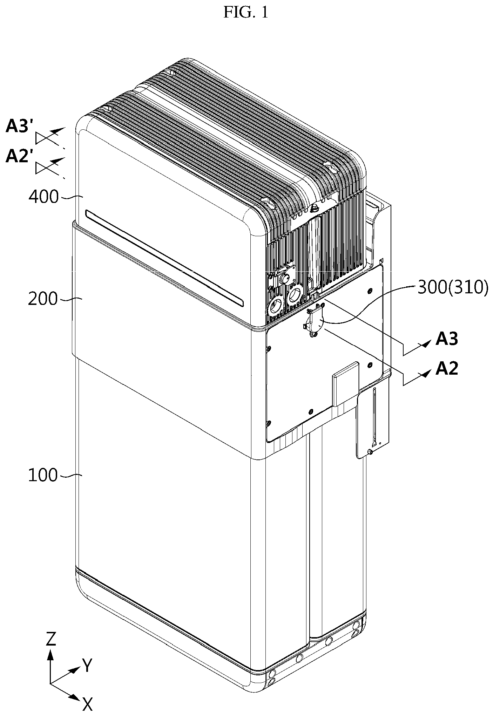

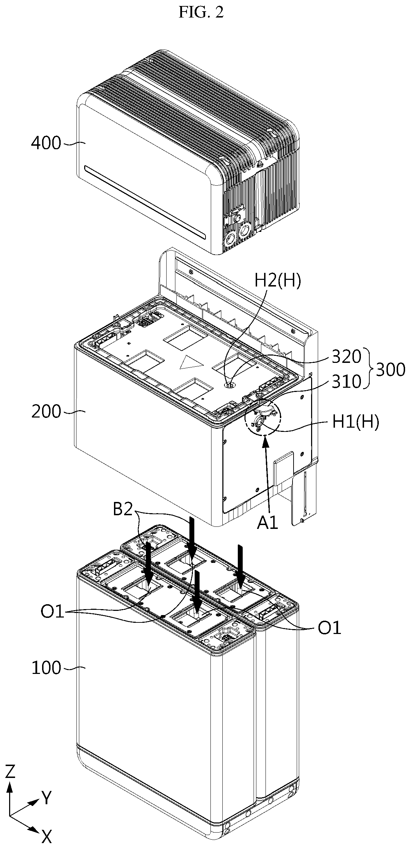

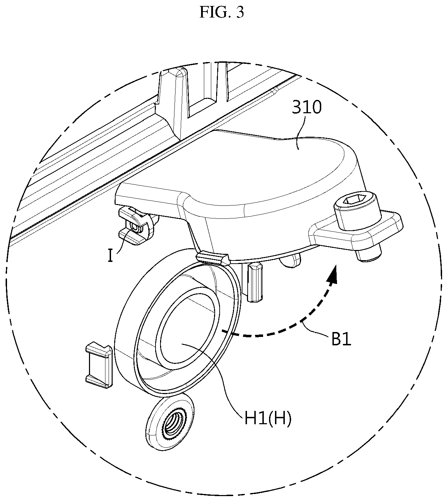

FIG. 1 is a perspective view showing the configuration of a battery pack according to an embodiment of the present disclosure. FIG.2 is an exploded perspective view of the configuration of FIG. 1, and FIG. 3 is an enlarged view of portion A1 in FIG. 2.

Referring to FIGS. 1 to 3, the battery pack according to the present disclosure includes a battery module 100, a fire extinguishing tank 200, and a cover member 300.

The battery module 100 may include one or more battery cells. Here, each battery cell may mean a secondary battery. A secondary battery may include an electrode assembly, an electrolyte, and a battery case. Moreover, the battery cell provided in the battery module 100 may be a pouch-type secondary battery. However, other types of a secondary battery, such as a cylindrical battery or a prismatic battery, may also be employed in the battery module 100 of the present disclosure.

In addition, the battery module 100 may include a module case for accommodating battery cells. In particular, the module case may have an empty space therein, so that a plurality of battery cells may be accommodated in the empty space. For example, as shown in FIG. 1, the module case may be formed in a substantially rectangular parallelepiped shape and may be configured to be upright in a vertical direction (Z-axis direction) perpendicular to the ground.

The fire extinguishing tank 200 may hold a fire extinguishing liquid, that is, a fire extinguishing agent in a liquid state. Here, as the fire extinguishing liquid, various substances capable of suppressing or extinguishing a fire, or lowering a temperature may be employed. For example, the fire extinguishing liquid may be water or a liquid containing water. In addition, the fire extinguishing tank 200 may include a tank housing for holding such fire extinguishing liquid in an internal space.

In addition, the fire extinguishing tank 200 may be disposed on top of the battery module 100. In particular, the fire extinguishing tank 200 may be configured to be detachable. For example, the tank housing of the fire extinguishing tank 200 may be configured to be mounted on and detached from the top of the module case of the battery module 100.

The fire extinguishing tank 200 may have a through hole formed therein, as indicated by H in FIGS. 2 and 3. This through hole H may be configured to communicate between the inner space and the outer space of the fire extinguishing tank 200. Here, the through hole H may be located at a higher position than the water surface of the fire extinguishing liquid stored in the inner space of the fire extinguishing tank 200.

The cover member 300 may be installed in the through hole H of the fire extinguishing tank 200. In addition, the cover member 300 may be configured to open or close the through hole H of the fire extinguishing tank 200. For example, the cover member 300 is coupled by a hinge at a portion indicated by I in FIG. 3, and the through hole H of the fire extinguishing tank 200 may be opened and closed through hinge rotation. That is, as shown in FIG. 3, while one end of the cover member 300 is attached to the fire extinguishing tank 200 by a hinge coupling method, the other end is separated from the through hole H in the direction indicated by arrow B 1, whereby it is possible to open the through hole H. Also, the cover member 300 may close the through hole H by rotating in the opposite direction of arrow B 1 in FIG. 3 and allowing the other end to cover the through hole H. A sealing material such as rubber or silicon may be provided at a portion of the cover member 300 that closes the through hole H in order to ensure sealing property. Meanwhile, due to the location of the through hole H, the cover member 300 may also be located at a higher level than the water surface of the fire extinguishing liquid.

In particular, the cover member 300 may be configured to open and close the through hole H according to a change in internal pressure of the fire extinguishing tank 200. That is, the cover member 300 may be configured to be automatically opened and closed when the internal pressure of the fire extinguishing tank 200 is higher or lower than a predetermined pressure by a certain level. Also, the cover member 300 may be configured to be opened and closed manually in addition to an automatic operation.

According to this embodiment of the present disclosure, the safety of the battery pack may be greatly improved by the fire extinguishing tank 200 located on the upper side of the battery module 100. In particular, when an abnormal situation occurs in the battery pack, for example, when a thermal runaway situation or a fire occurs inside the battery module 100, the fire may be suppressed or extinguished through the fire extinguishing liquid. In addition, by lowering the temperature of the battery module 100, a thermal runaway situation or an overheating situation may be blocked. Therefore, it is possible to prevent the risk of a fire or explosion from increasing to other portions outside the battery pack due to an abnormal situation such as a fire or overheating of the battery pack. Moreover, according to one aspect of the present disclosure, the injection of the fire extinguishing liquid may be made more smoothly.

In addition, according to this embodiment of the present disclosure, the cover member 300 is automatically opened and closed according to the change in internal pressure, so that breakage or damage caused by the change in internal pressure of the fire extinguishing tank 200 may be prevented. Therefore, durability of the fire extinguishing tank 200 and the battery pack including the same may be greatly improved.

In addition, in an embodiment of the present disclosure, the fire extinguishing tank 200 may be configured such that the fire extinguishing liquid does a free fall toward the battery module 100.

That is, since the fire extinguishing tank 200 is located on the upper side of the battery module 100, a separate power source may not be required to move the fire extinguishing liquid to the battery module 100 side, and the fire extinguishing liquid may be quickly injected. For example, referring to the embodiment of FIG. 2, the fire extinguishing liquid is injected into the battery module 100 as indicated by arrow B2, and this injection process may be performed naturally in a free fall manner. Therefore, according to this embodiment of the present disclosure, efficient thermal control for a battery cell whose temperature has risen due to thermal runaway or the like may be possible.

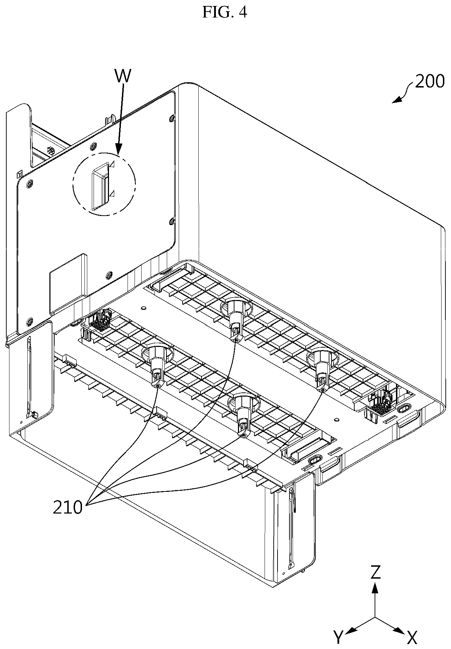

The fire extinguishing tank 200 may include a rupture member 210. This will be described in more detail with further reference to FIG. 4.

FIG. 4 is a perspective view of a configuration of the fire extinguishing tank 200 according to an embodiment of the present disclosure as viewed from the bottom.

Referring to FIG. 4, a rupture member 210 may be provided at the bottom of the fire extinguishing tank 200. The rupture member 210 may be ruptured under certain conditions. Also, the rupture member 210 may be configured to allow the fire extinguishing liquid to flow out when ruptured.

To this end, the rupture member 210 may be configured to communicate with the inner space of the fire extinguishing tank 200. For example, the fire extinguishing tank 200 may be generally formed in a sealed shape, but may have an input hole. In addition, the rupture member 210 may be inserted into the input hole to close the input hole. Also, when the rupture member 210 is ruptured, the input hole is opened, and thus the fire extinguishing liquid contained in the fie extinguishing tank 200 may flow out. In particular, when the rupture member 210 is ruptured, the fire extinguishing liquid may be injected into the battery module 100 in a free fall manner. At least one rupture member 210 may be provided in one fire extinguishing tank 200. For example, as shown in FIG. 4, four rupture members 210 may be provided in one fire extinguishing tank 200.

In addition, the rupturable member 210 may be configured to be broken under conditions such as temperature or pressure. For example, the rupturable member 210 may be configured to be ruptured under conditions of a certain temperature or higher and/or a certain pressure or higher. In particular, the rupture member 210 may be configured to be ruptured by venting gas. That is, when an event such as thermal runaway occurs in the battery module 100, venting gas may be generated and discharged from the battery module 100. At this time, the rupture member 210 may be formed of a material or shape that may be ruptured by heat or pressure of the venting gas.

As shown in FIG. 4, the rupture member 210 may be implemented as a glass bulb. For example, an input hole may be formed in the fire extinguishing tank 200, and the glass bulb may be inserted into and fastened to the input hole. In addition, the glass bulb may be damaged when in contact with the venting gas, so that the fire extinguishing liquid inside the fire extinguishing tank 200 may be ejected to the outside, particularly to the battery module 100 side.

According to this embodiment, the fire extinguishing tank 200 and the battery pack including the same may be simply configured, and a configuration in which the fire extinguishing liquid is injected into the battery module 100 side may be more smoothly arranged. In addition, according to this embodiment, a configuration in which the rupture member 210 is ruptured by the venting gas generated from the battery module 100 may be more easily provided.

In addition, the rupture member 210 may be implemented in various materials or shapes that may be ruptured according to changes in conditions such as heat or pressure. For example, the rupture member 210 may be implemented in the form of a vinyl material or an injection molding product.

The battery module 100 may have an opening formed to communicate with an inner space. For example, as indicated by O1 in FIG. 2, the battery module 100 may have an opening formed at an upper end thereof. Also, this opening O1 may communicate with the inner space of the module case where the battery cell is located.

Here, the rupture member 210 may be configured such that at least a portion thereof is inserted into the opening O1 of the battery module 100. For example, the rupture member 210 may be inserted into the inner space of the battery module 100 through the opening O1.

According to this embodiment of the present disclosure, the fire extinguishing liquid may easily flow into the inner space of the battery module 100. Therefore, it is possible to more effectively respond to a thermal event occurring inside the battery module 100, such as a thermal runaway, gas ejection, fire, or the like. Moreover, a battery cell that is a direct target of a thermal event may be located in the inner space of the battery module 100. Thus, according to the above embodiment, the fire extinguishing liquid may be directly injected into the battery cell. Therefore, it may be more advantageous in suppressing or preventing a fire or the like.

In addition, according to this embodiment of the present disclosure, the rupture member 210 such as a glass bulb may respond to the venting gas more quickly. That is, when the venting gas is generated in the inner space of the battery module 100, the venting gas may be discharged to the outside of the battery module 100 through the opening O1. In other words, the opening O1 may serve as an outlet for the venting gas in the battery module 100. Moreover, when the opening O1 is located on the upper side of the battery module 100, a large amount of venting gas may be discharged toward the opening O1 located on the upper side.

In this case, if the glass bulb is located at a portion where the venting gas is discharged, the glass bulb may be quickly ruptured when the venting gas is generated. Therefore, when a thermal event occurs, the fire extinguishing liquid may be injected more rapidly. Moreover, a separate operating power source or control configuration may not be required for the injection of the fire extinguishing liquid. Also, in this case, since the fire extinguishing liquid may be directly injected into the discharged venting gas, the temperature of the venting gas may be lowered and the discharge of an external ignition source such as a flame or spark included in the venting gas may be suppressed.

Meanwhile, the opening O1 formed in the battery module 100 may not necessarily be provided for discharging a venting gas or the like. For example, the opening O1 provided at the upper end of the battery module 100 shown in FIG. 2 may be provided for carrying the battery module 100. That is, the opening O1 may be configured to provide a space in which an operator or a carrying device may insert and grip a finger or a gripping tool when carrying the battery module 100. Alternatively, the opening O1 may be provided with a configuration for inserting a control module 400 to be described later or the fire extinguishing tank 200.

As shown in FIGS. 1 and 2, the battery pack according to the present disclosure may further include a control module 400.

The control module 400 may be electrically connected to the battery module 100. Also, the control module 400 may be configured to manage the battery module 100. In particular, the control module 400 may be configured to control a charging operation or a discharging operation of the battery module 100. In addition, the control module 400 may be configured to measure, calculate, receive, or control various electrical, physical, and chemical characteristics of the battery module 100, the battery cell included therein, or its surrounding environment. For example, the control module 400 may measure, calculate, or control the voltage, current, temperature, state of charge (SOC), state of health (SOH), internal resistance, and the like of the battery cell or the battery module 100.

The control module 400 may receive operating power from the battery module 100 to manage the battery module 100. In addition, the control module 400 may exchange various data with the battery module 100 or other external devices through a wired or wireless communication network. The control module 400 may include various electrical components such as a battery management system (BMS), a relay, a current sensor, and the like. Also, the control module 400 may include a control housing for accommodating such electrical components.

In addition, the control module 400 may include a pack terminal. The pack terminal may be configured to be connected to the battery pack and an external charging or discharging device. For example, the pack terminal may include an outlet, a plug, a connector, or the like to be connected to a commercial power source or load. In this case, the control module 400 may have a power path for exchanging charging power and discharging power with the battery module 100. This power path may function as a path for exchanging charging/discharging power between the pack terminal and the battery module 100.

In this embodiment, the fire extinguishing tank 200 may be mounted between the battery module 100 and the control module 400. In particular, the battery module 100 may be located below the control module 400. In this case, the fire extinguishing tank 200 may be located above the battery module 100 and below the control module 400.

At this time, the fire extinguishing tank 200 may be configured to be coupled to the battery module 100 and the control module 400. For example, the lower end of the fire extinguishing tank 200 may be fastened and fixed to the upper end of the battery module 100 by bolting or hooking. In addition, the upper end of the fire extinguishing tank 200 may be fastened and fixed to the lower end of the control module 400 by bolting or hooking.

In addition, the fire extinguishing tank 200 may include a connection member for connecting the battery module 100 and the control module 400. For example, the fire extinguishing tank 200 may include a cable extending in a vertical direction, and connection connectors may be provided at both ends of the cable. In this case, the connection connector provided at the top of the cable may be connected to the connector of the control module 400, and the connection connector provided at the bottom of the cable may be connected to the connector of the battery module 100. In addition, the cable may allow electrical connection to be made between the battery module 100 and the control module 400 through these connections.

According to this embodiment of the present disclosure, in the battery pack including the battery module 100 and the control module 400, the fire extinguishing tank 200 may be interposed between the battery module 100 and the control module 400, thereby responding to thermal events for both the battery module 100 and the control module 400.

In addition, the cover member 300 may be configured to be opened and closed in a direction of compensating for a pressure change inside the fire extinguishing tank 200. That is, when the internal pressure of the fire extinguishing tank 200 changes, the cover member 300 may be opened and closed in a direction of reducing the pressure change.

For example, the cover member 300 may be opened and closed so that the internal pressure of the fire extinguishing tank 200 decreases again when a pressure change occurs in a direction where the internal pressure of the fire extinguishing tank 200 increases. As another example, the cover member 300 may be opened and closed so that the internal pressure of the fire extinguishing tank 200 increases again when a pressure change occurs in a direction where the internal pressure of the fire extinguishing tank 200 decreases.

Accordingly, through the compensating operation of the cover member 300, the pressure change inside the fire extinguishing tank 200 may not exceed a certain level. Therefore, it is possible to prevent breakage or damage of the fire extinguishing tank 200 due to a pressure change inside the fire extinguishing tank 200, while enabling smooth discharge of the fire extinguishing liquid.

The cover member 300 may include one or a plurality of unit covers. Moreover, when the cover member 300 includes a plurality of unit covers, a through hole H corresponding to each unit cover may be formed in the fire extinguishing tank 200.

In particular, as shown in FIGS. 2 and 3, the cover member 300 may include a first cover 310 as a unit cover. In particular, the first cover 310 may be configured to be opened when the pressure inside the fire extinguishing tank 200 increases.

For example, referring to FIG. 3, a first hole H1 may be formed as a through hole H at one side of the fire extinguishing tank 200. Also, the first cover 310 may be configured to open or close the first hole H1. As a more specific example, when the internal pressure of the fire extinguishing tank 200 is at a normal level, the first cover 310 may be maintained in a state of closing the first hole H1. However, when the internal pressure of the fire extinguishing tank 200 increases to a certain level or higher than the normal level, the first cover 310 may rotate in the direction of arrow B1 in FIG. 3. At this time, the first hole H1 may be opened.

According to this embodiment of the present disclosure, when the pressure inside the fire extinguishing tank 200 increases, the gas inside the fire extinguishing tank 200 may be discharged to the outside through the first hole H1. In particular, there may be a situation in which the fire extinguishing liquid is frozen due to a decrease in external temperature, and in this freezing situation, the volume of the fire extinguishing liquid such as water may increase. At this time, the internal pressure of the fire extinguishing tank 200 may increase, and the first cover 310 may open the first hole H1, whereby the gas inside the fire extinguishing tank 200 may be discharged to the outside. Therefore, by preventing the internal pressure of the fire extinguishing tank 200 from continuously increasing, problems in which the fire extinguishing tank 200 is damaged, broken, or exploded may be prevented.

Moreover, in the case of a battery pack used in a residential energy storage system and the like, it is generally used outdoors. Therefore, there may be a situation in which the fire extinguishing liquid may freeze depending on the use environment such as winter season or polar regions, but according to the above embodiment, damage or breakage of the fire extinguishing tank 200 or the glass bulb included therein may be effectively prevented even in such a situation.

Also, in this embodiment, the first cover 310 may be configured to be opened in an outward direction. For example, when the internal pressure of the fire extinguishing tank 200 increases, the first cover 310 may be configured to be opened outward, as indicated by arrow B1 in FIG. 3. In addition, through this opening operation, the gas inside the fire extinguishing tank 200 may be discharged to the outside.

According to this embodiment of the present disclosure, the opening operation of the first cover 310 may be made more smoothly. That is, the first cover 310 may be opened to allow the gas inside the fire extinguishing tank 200 to be discharged to the outside due to an increase in internal pressure of the fire extinguishing tank 200, and if it is opened in an outward direction in this way, the opening operation may be made more easily. Also, in this case, the gas inside the fire extinguishing tank 200 may not be hindered by the first cover 310 on its way into the first hole H1. Therefore, the internal gas may be discharged to the outside more smoothly.

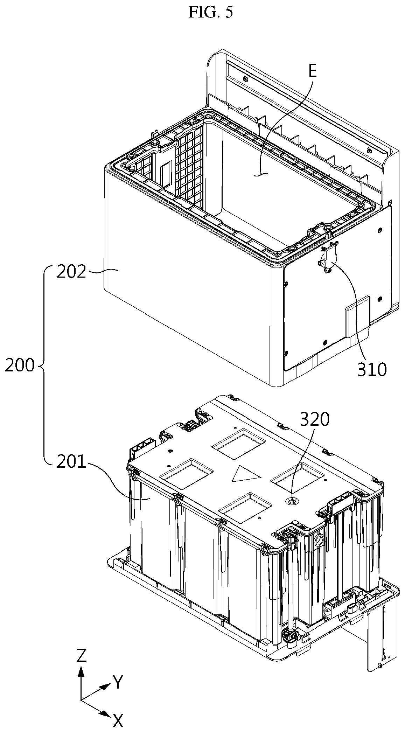

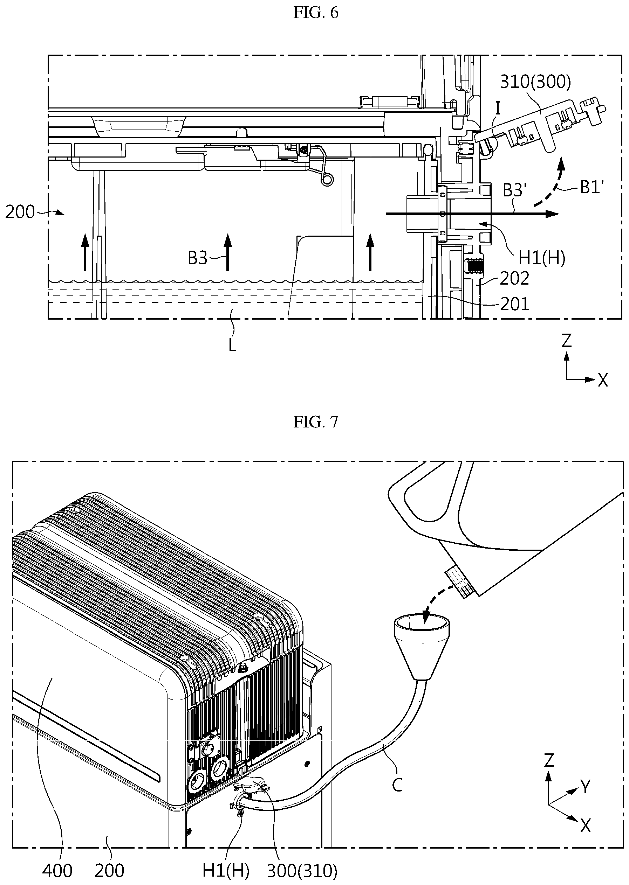

The fire extinguishing tank 200 may include a plurality of unit tanks. This will be described in more detail with further reference to FIGS. 5 and 6.

FIG. 5 is a perspective view showing a separated fire extinguishing tank according to an embodiment of the present disclosure. Also. FIG. 6 is an enlarged cross-sectional view of a portion of a fire extinguishing tank according to an embodiment of the present disclosure. For example, it can be said that FIG. 6 shows the right portion of the cross-sectional configuration along line A2-A2' in FIG. 1.

Referring to FIGS. 5 and 6, the fire extinguishing tank 200 may include an inner tank 201 and an outer tank 202. The inner tank 201 has an empty space therein and may directly hold the fire extinguishing liquid as indicated by L in this inner space. In particular, the inner tank 201 may be configured in a sealed form to accommodate the fire extinguishing liquid L. For example, the inner tank 201 may be configured to have an airtight performance of IP grade 55 or higher so that the fire extinguishing liquid L or the like does not leak in a normal state. Also, the outer tank 202 may be configured to be larger than the inner tank 201 and to accommodate the inner tank 201 in the inner space. Therefore, it can be said that the fire extinguishing tank 200 is at least partially double-structured. Moreover, the outer tank 202 may be configured to at least partially surround the outer side of the inner tank 201. For example, the outer tank 202 may surround all or a portion of the inner tank 201 from the outer side.

In this embodiment, the first cover 310 may be mounted on the outer tank 202. For example, referring to FIGS. 5 and 6, the first cover 310 may be mounted on the right side of the outer tank 202. In particular, the first cover 310 is mounted on the outer surface of the outer tank 202 and may be opened by hinge rotation in an outward direction as indicated by arrow B 1'.

For example, when the fire extinguishing liquid contained in the inner tank 201 is frozen, the volume of the fire extinguishing liquid may expand, as indicated by arrow B3 in FIG. 6. At this time, as the pressure of the upper portion of the fire extinguishing liquid in the inner tank 201 increases, the first cover 310 may be opened. Also, when the first cover 310 is opened, the gas inside the fire extinguishing tank 200 may be discharged to the outside. That is, in the direction indicated by arrow B3' in FIG. 6, the gas inside the fire extinguishing tank 200 may be discharged to the outside space.

According to this embodiment of the present disclosure, the first cover 310 may be opened easily. Therefore, when the internal pressure of the fire extinguishing tank 200 increases, gas may be discharged quickly and smoothly.

Meanwhile, the first hole H1, which is the through hole H on which the first cover 310 is mounted, may be configured to communicate with each other in the inner tank 201 and the outer tank 202. For example, the first hole H1 may include a first inner hole formed in the inner tank 201 and a first outer hole formed in the outer tank 202. Also, the first inner hole and the first outer hole may be connected to each other as one hole. In this case, a connection portion between the first inner hole and the first outer hole may be sealed with an O-ring made of a material such as rubber or silicon. Alternatively, the first inner hole and the first outer hole may be penetrated by one pipe, and the inner space of the pipe may function as the first hole H1. Here, the pipe may be made of various materials such as polymer or rubber. In this embodiment, the gas inside the fire extinguishing tank 200 may be discharged to the outside of the fire extinguishing tank 200 via the first hole H1 formed by connecting the first inner hole and the first outer hole, as indicated by arrow B3' in FIG. 6.

Also, in this embodiment, the first cover 310 may be configured such that the fire extinguishing liquid is injected into the inner space of the fire extinguishing tank 200 from the outside. This will be described in more detail with further reference to FIG. 7.

FIG. 7 is a view schematically showing an example of a configuration for injecting a fire extinguishing liquid into a battery pack according to an embodiment of the present disclosure.

Referring to FIG. 7, when the first cover 310 is opened and then the first hole H1 is exposed, the fire extinguishing liquid may be injected into the first hole H1. At this time, the first cover 310 may be opened manually regardless of the change in the internal pressure of the fire extinguishing tank 200, particularly the internal pressure of the inner tank 201. In addition, as shown in FIG. 7, one end of the hose C may be connected to the first hole H1, so that the fire extinguishing liquid may be injected into the fire extinguishing tank 200. For example, the replenishment of the fire extinguishing liquid may be performed in a form in which the fire extinguishing liquid is injected in the opposite direction of the arrow B3' in the exemplary drawing of FIG. 6. In this case, the replenishment of the fire extinguishing liquid may be performed outside the outer tank 202, and the first outer hole and the first inner hole may be connected to each other in a sealed state. Therefore, the fire extinguishing liquid injected through the first outer hole may flow into the inner space of the inner tank 201 through the first inner hole.

According to this embodiment, when the fire extinguishing liquid becomes insufficient in the internal space of the extinguishing tank 200 due to the fact that it is used, evaporated or leaked, the fire extinguishing liquid may be replenished through the first cover 310. Therefore, maintenance of the battery pack may be performed more easily. In addition, by ensuring that the fire extinguishing liquid is always retained at a certain level or higher, it is possible to ensure that the state of safety by the fire extinguishing tank 200 is continuously maintained.

In addition, the first cover 310 may be located on the side of the fire extinguishing tank 200. For example, the first cover 310 may be located on the right side of the outer tank 202 as shown in various drawings. In particular, the first cover 310 may be located in a portion exposed to the outside in the fire extinguishing tank 200.

According to this embodiment of the present disclosure, the process of discharging internal gas as shown in FIG. 6 may be performed more smoothly. In addition, according to this embodiment of the present disclosure, the process of injecting the fire extinguishing liquid as shown in FIG. 7 may be performed more conveniently.

Moreover, the fire extinguishing tank 200 may have other components, such as the battery module 100 or the control module 400, at the top and/or bottom thereof. Therefore, when the first cover 310 is located on the side of the fire extinguishing tank 200, the process of discharging internal gas to the outside or injecting the fire extinguishing liquid may be performed easily without being hindered by these other components.

Meanwhile, in the case of the first hole H1 opened and closed by the first cover 310, it may have a form extending lengthwise in a horizontal direction (X-axis direction) in FIG. 6, but the present disclosure is not necessarily limited to the form of the first hole H1.

For example, the first hole H1 may be configured to be inclined at a predetermined angle with respect to the horizontal direction. For example, the first hole H1 may include an inclined portion configured to decrease in position from an outward to an inward direction. In particular, the first hole H1 may have an outer inlet positioned higher than an inner inlet.

According to this inclined configuration, when the water level rises due to freezing of the fire extinguishing liquid or the like, it is possible to more reliably prevent the fire extinguishing liquid from escaping to the outside through the first hole H1. In addition, when the fire extinguishing liquid is injected into the fire extinguishing tank 200 as shown in FIG. 7, the injected fire extinguishing liquid falls on the surface of the fire extinguishing liquid already existing inside the fire extinguishing tank 200, thereby reducing the generation of bubbles. Accordingly, it is possible to ensure that the fire extinguishing liquid is sufficiently replenished and prevent the internal pressure from changing differently from the designed level after replenishing the fire extinguishing liquid. Therefore, it is possible to prevent the function of the cover member 300 that is opened and closed according to the internal pressure of the fire extinguishing tank 200 from deteriorating or malfunctioning.

In addition, the battery pack according to the present disclosure may further include an observation window.

For example, as indicated by W in FIG. 4, an observation window W may be provided on one side of the fire extinguishing tank 200, for example, on a side portion. The observation window W may be made of a transparent or translucent material and may be provided to observe the fire extinguishing liquid retained in the internal space of the fire extinguishing tank 200. Moreover, when an inner tank 201 and an outer tank 202 are provided in the fire extinguishing tank 200, the observation window W is provided in both the inner tank 201 and the outer tank 202, and may exist in positions corresponding to each other.

According to this embodiment of the present disclosure, by directly checking the level or state of the fire extinguishing liquid, it is possible to grasp or predict in advance when the fire extinguishing liquid needs to be replenished. In addition, according to the above embodiment, it is possible to identify the overall condition of the fire extinguishing tank 200 or the battery pack, for example, whether it is damaged or not, by checking the state of the fire extinguishing liquid. Therefore, according to the above embodiment, maintenance and repair of the fire extinguishing tank 200 or the battery pack may be performed more easily.

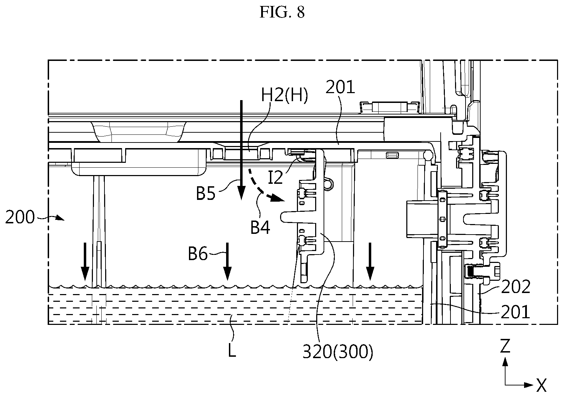

In addition, the cover member 300 may include a second cover 320 as a unit cover. In particular, the second cover 320 may be configured to be opened when the pressure inside the fire extinguishing tank 200 decreases. This will be described in more detail with reference to FIG. 8.

FIG. 8 is an enlarged cross-sectional view of another portion of the fire extinguishing tank 200 according to an embodiment of the present disclosure. For example, it can be said that FIG. 8 shows the right side of the cross-sectional configuration along the line A3-A3' in FIG. 1.

Referring to FIG. 8, a second hole H2 may be formed at one side of the fire extinguishing tank 200 as a through hole H. The second hole H2 may be formed at a position different from that of the first hole H1. Also, the second cover 320 may be configured to open or close the second hole H2.

As a more specific example, if the internal pressure of the fire extinguishing tank 200 is above a certain level, the second cover 320 may remain in a state of closing the second hole H2. However, if the internal pressure of the fire extinguishing tank 200 decreases below a certain level, the second cover 320 may make a hinge rotation as indicated by arrow B4 in FIG. 8. At this time, the second hole H2 may be opened.

According to this embodiment of the present disclosure, when the pressure inside the fire extinguishing tank 200 is lowered, gas outside the fire extinguishing tank 200 may flow into the inside through the second hole H2. That is, as indicated by arrow B5 in FIG. 8, gas outside the fire extinguishing tank 200 may flow into the fire extinguishing tank 200 through the second hole H2.

In particular, when an event such as thermal runaway occurs in the battery module 100 located below the fire extinguishing tank 200 and thus the fire extinguishing liquid L is injected into the battery module 100 as indicated by arrow B2 in FIG. 2, the water level inside the fire extinguishing tank 200 may be lowered as indicated by B6 in FIG. 8. At this time, the pressure inside the fire extinguishing tank 200 may be lowered, and this pressure decrease may reduce the rate at which the fire extinguishing liquid L is injected into the battery module 100 or may interfere with the injection itself. However, as in the embodiment of FIG. 8, when the second cover 320 is opened at the time of decrease of the pressure inside the fire extinguishing tank 200, external gas may be introduced into the fire extinguishing tank 200, thereby maintaining the pressure inside the fire extinguishing tank 200 at a normal level. Therefore, the fire extinguishing liquid L may continue to be rapidly and smoothly discharged toward the battery module 100 side.

In addition, the second cover 320 may be configured to be opened in an inward direction. For example, the second cover 320 may be mounted on the inner surface of the fire extinguishing tank 200. Also, when the internal pressure of the fire extinguishing tank 200 decreases, the second cover 320 may be configured to be opened toward the inner space of the fire extinguishing tank 200, as indicated by arrow B4 in FIG. 8. And, through this opening operation, gas outside the fire extinguishing tank 200 may flow into the inner space.

According to this embodiment of the present disclosure, the opening operation of the second cover 320 may be made more smoothly. That is, the second cover 320 may be opened to allow gas outside the fire extinguishing tank 200 to flow into the inside due to a decrease in internal pressure of the fire extinguishing tank 200, and when opened in an inward direction, the opening operation may be made more easily. Also, in this case, when the external gas flows into the second hole H2, it may not be hindered by the second cover 320, and thus the inflow process of the external gas may be performed more smoothly.

Moreover, the fire extinguishing tank 200 may have an inner tank 201 and an outer tank 202, as described above. In this case, the second cover 320 may be mounted on the inner tank 201. For example, referring to FIG. 8, the second cover 320 may be configured to be mounted on an inner surface of the inner tank 201 and be opened in an inward direction. At this time, a portion where the second cover 320 is located in the inner tank 201, that is, a portion where the second hole H2 is formed, may not be covered by the outer tank 202. For example, the outer tank 202 may be formed with an open inner space, as indicated by E in FIG. 5. Also, a portion where the second cover 320 is provided in the inner tank 201 may be located at a portion where the open space E is formed in the outer tank 202.

According to this embodiment of the present disclosure, the opening operation of the second cover 320 and the inflow of external gas thereby may be made more easily. In particular, in the above embodiment, the second cover 320 may be opened well in an inward direction. In addition, in this case, the structure of the fire extinguishing tank 200 becomes simpler, which may contribute to weight lightening of the battery pack. Moreover, the second hole H2 needs to be formed only in the inner tank 201 and may not be formed separately in the outer tank 202. In this embodiment, when the second cover 320 mounted on the inside of the inner tank 201 is opened, outside air may flow into the inner tank 201 immediately.

The second cover 320 may be located on the upper side of the fire extinguishing tank 200. For example, as shown in FIGS. 2, 5 and 8, the second hole H2 and the second cover 320 mounted thereon may be located on the upper surface side of the fire extinguishing tank 200.

In particular, when both the first cover 310 and the second cover 320 are provided as the cover member 300, the first cover 310 may be provided on the side surface of the fire extinguishing tank 200 and the second cover 320 may be provided on the upper surface of the fire extinguishing tank 200. In this embodiment of the present disclosure, the positions of the first cover 310 and the second cover 320 may be formed differently, thereby preventing the opening/closing operations of the first cover 310 and the second cover 320 from interfering with each other.

In addition, according to the above embodiment, the external air is supplied from the upper side to the inside of the fire extinguishing tank 200, so that the gas pressure may be evenly distributed in the direction of the fire extinguishing liquid from the upper side of the fire extinguishing liquid. Therefore, even if the fire extinguishing liquid is discharged through the glass bulb provided at any location, the fire extinguishing liquid may be discharged smoothly. Also, according to the above embodiment, even if venting gas flows from the lower side of the fire extinguishing tank 200, it is possible to prevent the venting gas from flowing into the fire extinguishing tank 200 through the second cover 320 side.

Also, according to the above embodiment, in the process of inserting the hose C or the like into the inner tank 201 through the first hole H1 to inject the fire extinguishing liquid as in the embodiment of FIG. 7, it may not be hindered by the second cover 320. In addition, according to the above embodiment, even if the battery pack is installed in an inclined place and thus the water level in the inner space of the inner tank 201 is formed to be inclined, the problem of leakage of the fire extinguishing liquid to the outside through the second hole H2 may be prevented.

Meanwhile, in an embodiment in which the fire extinguishing tank 200 includes an inner tank 201 and an outer tank 202, the inner tank 201 and the outer tank 202 may be configured to be at least partially spaced apart. In particular, referring to the embodiment of FIG. 5, the outer tank 202 may be configured to surround the four side surfaces (left side, right side, front side, and rear side) of the inner tank 201, except for the top and bottom surfaces. In this case, the portion where the inner tank 201 is covered by the outer tank 202 may be configured such that the inner tank 201 and the outer tank 202 are spaced apart from each other. For example, in the embodiments of FIGS. 6 and 8, side surfaces of the inner tank 201 and the outer tank 202 may be configured to be spaced apart from each other, at least partially, in the left-right direction. For example, an empty space may be formed between the right wall of the inner tank 201 and the right wall of the outer tank 202.

In this case, the fire extinguishing liquid inside the fire extinguishing tank 200 may be retained more safely. In particular, even if an impact or the like is applied to the side of the fire extinguishing tank 200, the transmission of the impact may be alleviated by the double configuration of the outer tank 202 and the inner tank 201 and the empty space formed therebetween. Therefore, it is possible to prevent the fire extinguishing liquid from leaking abnormally by preventing the fire extinguishing tank 200, particularly the inner tank 201, from being damaged by an impact, vibration or the like.

Also, when venting gas is discharged, the separation space between the inner tank 201 and the outer tank 202 may function as a venting path. For example, the venting gas discharged from the battery module 100 to the lower portion of the fire extinguishing tank 200 may flow along the lower surface of the fire extinguishing tank 200 and then flow through the separation space between the sides of the inner tank 201 and the outer tank 202 to be discharged to the outside. In this case, a venting path is formed inside the fire extinguishing tank 200, so that the venting direction may be controlled.

The cover member 300 may be configured to switch from an open state to a closed state when the pressure difference between the internal pressure of the fire extinguishing tank 200 and the external air pressure comes within a certain level.

For example, referring to the embodiment of FIG. 6, when the water level of the fire extinguishing liquid rises as indicated by arrow B3 due to freezing of the fire extinguishing liquid stored in the inner tank 201, the first cover 310 may rotate in the direction indicated by the arrow B 1', that is, counterclockwise, to be in an open state. Also, when the air in the inner tank 201 escapes as indicated by arrow B3' and thus the air pressure difference between the inside and outside of the inner tank 201 becomes the same or comes within a certain level, the first cover 310 may rotate again in the opposite direction of arrow B 1', that is, clockwise, to be in a closed state.

At this time, the cover member 300 may include an elastic body. For example, in the first cover 310, a spring, particularly a torsion spring, may be mounted on a hinge portion indicated by I1 in FIG. 6. In this case, when the internal pressure of the inner tank 201 is applied at a level exceeding the elastic force of the torsion spring, the first cover 310 may be opened. Also, when internal gas is discharged to some extent and thus the internal pressure of the inner tank 201 becomes lower than the elastic force of the torsion spring, the first cover 310 may be closed.

As another example, referring to the embodiment of FIG. 8, when the fire extinguishing liquid stored in the inner tank 201 is injected into the battery module 100 side and thus the water level of the fire extinguishing liquid is lowered as indicated by arrow B6, the second cover 320 may rotate in the direction indicated by the arrow B4, that is, clockwise, to be in an open state. Also, after external air enters the inner tank 201 to some extent, the second cover 320 may rotate again in the opposite direction of arrow B4, that is, counterclockwise, to be in a closed state.

In addition, an elastic body such as a spring may also be mounted on the second cover 320. For example, a torsion spring may be mounted on a hinge portion indicated by I2 in FIG. 8. In this case, when an air pressure difference between the inside and outside of the inner tank 201 occurs at a level exceeding the elastic force of the torsion spring, the second cover 320 may be opened. Also, when outside air flows in to some extent and thus the air pressure difference between the inside and outside becomes lower than the elastic force of the torsion spring, the second cover 320 may be closed.

According to this embodiment of the present disclosure, a configuration in which the cover member 300 is automatically opened and closed depending on the pressure change inside the fire extinguishing tank 200 may be easily achieved. In particular, according to the above embodiment, no separate power source or control is required in the closing operation as well as in the opening operation of the cover member 300. In addition, according to the above embodiment, when the pressure inside the fire extinguishing tank 200 comes in at a level similar to the external pressure, the cover member 300 may be closed automatically and quickly, thereby more reliably preventing the outflow of fire extinguishing liquid or the inflow of external foreign substances through the through hole H.

An energy storage system according to the present disclosure includes one or more battery packs according to the present disclosure described above. Also, the energy storage system according to the present disclosure may further include general components included in the energy storage system in addition to the battery pack. In particular, the energy storage system according to the present disclosure may be a residential (building) energy storage system used to store energy in a house or building.

While the present disclosure has been hereinabove described with regard to a limited number of embodiments and drawings, the present disclosure is not limited thereto and it is obvious to those skilled in the art that a variety of modifications and changes may be made thereto within the technical aspects of the present disclosure and the equivalent scope of the appended claims.

### [Reference Signs]

100: battery module
200: fire extinguishing tank
201: inner tank, 202: outer tank
210: rupture member
300: cover member
310: first cover, 320: second cover
400: control module
H: through hole
H1: first hole, H2: second hole
L: fire extinguishing liquid
W: observation window

## Claims

1. A battery pack comprising:
a battery module having one or more battery cells;
a fire extinguishing tank holding a fire extinguishing liquid, disposed on top of the battery module and having a through hole formed therein; and
a cover member installed in the through hole of the fire extinguishing tank and configured to open or close the through hole according to a change in internal pressure of the fire extinguishing tank.

2. The battery pack according to claim 1,
wherein the fire extinguishing tank comprises a rupture member configured to be ruptured under a predetermined condition and to allow the outflow of the fire extinguishing liquid when ruptured.

3. The battery pack according to claim 1,
which further comprises a control module connected to the battery module and configured to manage the battery module,
wherein the fire extinguishing tank is mounted between the battery module and the control module.

4. The battery pack according to claim 1,
wherein the cover member is configured such that an opening/closing operation is performed in a direction compensating for a pressure change inside the fire extinguishing tank.

5. The battery pack according to claim 1,
wherein the cover member has a first cover configured to be opened when the pressure inside the fire extinguishing tank increases.

6. The battery pack according to claim 5,
wherein the first cover is configured to be openable in an outward direction.

7. The battery pack according to claim 6,
wherein the fire extinguishing tank comprises an inner tank holding the fire extinguishing liquid in the inner space and an outer tank at least partially surrounding the outer side of the inner tank,
wherein the first cover is mounted on the outer tank.

8. The battery pack according to claim 5,
wherein the first cover is located on the side of the fire extinguishing tank.

9. The battery pack according to claim 1,
wherein the cover member has a second cover configured to be opened when the pressure inside the fire extinguishing tank decreases.

10. The battery pack according to claim 9,
wherein the second cover is configured to be openable in an inward direction.

11. The battery pack according to claim 10,
wherein the fire extinguishing tank comprises an inner tank holding the fire extinguishing liquid in the inner space and an outer tank at least partially surrounding the outer side of the inner tank,
wherein the second cover is mounted on the inner tank.

12. The battery pack according to claim 9,
wherein the second cover is located on the upper side of the fire extinguishing tank.

13. The battery pack according to claim 1,
wherein the cover member is configured to switch from an open state to a closed state when the pressure difference between the pressure inside the fire extinguishing tank and the external air pressure comes within a certain level.

14. An energy storage system comprising a battery pack according to any one of claims 1 to 13.
